# EUROPEAN PATENT APPLICATION

(11) **EP 3 386 065 A1**
(43) Date of publication of application: **10.10.2018**
(21) Application number: 18165080.5
(22) Date of filing: 29.03.2018
(51) Int. Cl.: H02J 7/00

(54) **BATTERY MANAGEMENT SYSTEM AND BATTERY CHARGER FOR ESTABLISHING VIA WIRELESS COMMUNICATION A BATTERY STATUS**

(30) Priority: 03.04.2017 DE 102017107155
(71) Applicant: ABERTAX RESEARCH AND DEVELOPMENT LTD., PLA 3000 Paola (MT)
(72) Inventor: Tabone, Malcolm, Hal Qormi, QRM 3612 (MT); Mentzer, Björn, 63452 Hanau (DE); Cilia, Prof. Dr. Joseph, Haz Zebbug, ZBG 1921 (MT); Izzo, Keith, Naxxar, NXR 4130 (MT); Brincat, Andrea, Il-Mosta, MST 3215 (MT)
(74) Representative: Diehl & Partner GbR

(57) **Abstract**

A battery charger (3) and a battery management system are proposed. As soon as the rechargeable battery (2) is connected to the battery charger (3), a controller (33) of the battery charger (3) applies one electric pulse or a sequence of electric pulses to a terminal (311) for a power line (5) for applying charging current to the rechargeable battery (2). A controller (14) of the rechargeable battery recognizes the electric pulse or the sequence of electric pulses that are received at a terminal (22) for the power line (5) of the rechargeable battery. The controller (14) of the rechargeable battery (2) in return broadcasts information on type, identity and actual battery status to the battery charger (2) via an interface (12) for wireless communication. The battery charger (3) receives this information using an interface (32) for wireless or wired communication and the controller (33) of the battery charger (3) uses this information to choose and apply an optimal charging protocol when charging the rechargeable battery (2) that is connected to the battery charger (3).

## Description

The present invention relates to a battery management system, battery charger and a system consisting of the same. More specifically, the present invention relates to a system for establishing wireless communication between a battery management system of a rechargeable battery and a battery charger, for identifying individual rechargeable batteries and their status to adapt the charging profile of a respective rechargeable battery.

Today, various types of rechargeable batteries which can be charged, discharged into a load, and recharged many times are known (e. g. lead-acid, Lithium-Ion, NiMh). In order to guarantee a safe operation and achieve a long lifetime, modern rechargeable batteries often comprise a battery management system (BMS). The battery management system BMS may alternatively be referred to as battery monitoring system (BMS) or battery management unit (BMU). Thus, it is not mandatory that the battery management system manages the rechargeable battery. It is sufficient that the battery management system monitors the rechargeable battery.

The battery management system is usually contained in the housing of the rechargeable battery (which may consist of one or plural cells) and comprises several sensors for measuring e. g. voltage, temperature, state of charge or depth of discharge, coolant flow and current regarding the battery as a whole or even regarding individual cells. Based on the measurement results, the battery management system may calculate several parameters such as total number of charging/discharging cycles, energy/charge delivered since the very first charge and/or last charge cycle, internal impedance of the cells, maximum charge and discharge current. The battery management system may use these parameters to detect operating conditions that are harmful for the rechargeable battery. The reason may be that the current, voltage or temperature are outside the normal range. As a consequence, operation of the battery can be automatically interrupted by the battery management system.

In order to provide the data contained in the battery management system to the outside of the battery (e. g. to detect the condition of the battery), the battery management system may have an interface and/or a display. The interface may enable wired or wireless communication. The wired communication may be performed via a separate data cable or using a power line cable providing the charging current from a battery charger to the rechargeable battery.

A rechargeable battery having a modern battery management system is often referred to as "smart battery".

In order to charge a rechargeable battery by forcing electrical current to flow in accordance with a charging protocol through the rechargeable battery, battery chargers are used. The charging protocol depends on the size and type of the battery being charged and can vary over the lifetime of the battery. The charging protocol may e. g. indicate which voltage and which current is applied for which time period at which stage of the charging procedure.

In order to gain full profit from the information gained by the battery management system of a rechargeable battery, even the battery charger should have an interface enabling wired or wireless communication with the battery management system of the rechargeable battery.

A battery charger having such an interface is often referred to as "smart charger". A smart charger is able to retrieve information from the battery management system of a smart battery that is currently charged. This information may include information on the charging history and allows the battery charger to better adapt the charging profile to the individual rechargeable battery.

The interfaces used to connect known smart batteries and known smart chargers to one another to allow a data exchange suffer of several disadvantages:
If a wired interface is used, there is a risk that the data cable may be damaged as it is often much more fragile than the power line cable. Furthermore, various types of connectors may be used, causing a risk of incompatibilities.

Wireless interfaces (e. g. using the Bluetooth™ or WiFi™ standard) work very well as long as there is only one rechargeable battery and one battery charger. If several rechargeable batteries are to be charged with several battery chargers at the same location at the same time, it is often not possible to guarantee that a rechargeable battery is communicating with the battery charger that is actually charging the battery.

Embodiments of the present invention aim to provide a battery management system, battery charger and a system including both that allow a reliable communication between the battery management system of a rechargeable battery that is subject to a charge with the battery charger charging the rechargeable battery.

According to an embodiment, a battery/charger management system comprises at least one rechargeable battery with an integrated battery management system, and at least one battery charger. The at least one battery charger comprises a voltage sensor, an interface for wireless communication and a controller connected to both the voltage sensor and the interface for wireless communication. The battery management system comprises a sensor for determining a status of the rechargeable battery, an interface for wireless communication and a memory. The sensor, interface and memory of the battery management system are connected to the controller. The sensor of the battery management system is connected with at least one sensing element to monitor at least one battery status parameter to be electronically stored in the memory for processing by the controller and for transferring said battery status information derived from said battery status parameter via the interface to the at least one battery charger. The controller of the battery charger is adapted to apply an electric pulse signal (which may consist of one electric pulse or a sequence of electric pulses, wherein each electric pulse may be a voltage pulse or a current pulse or a combined voltage pulse and current pulse.) via a power line to the battery management system of the rechargeable battery as soon as it is determined by the voltage sensor of the battery charger that a rechargeable battery has been connected to the battery charger (using the power line). The battery management system of the rechargeable battery is adapted to broadcast a battery identity code and battery status information via the interface for wireless communication of the rechargeable battery and the interface for wireless communication of the battery charger to the controller of the charger upon receipt of the electric pulse signal by the battery management system. The controller of the charger is adapted to adapt and control a charging process to charge the rechargeable battery in dependency on the battery identity code and battery status information received from the battery management system.

As soon as the rechargeable battery is connected to the battery charger, the controller of the battery charger applies one electric pulse or a sequence of electric pulses to a terminal for the power line for applying charging current to the rechargeable battery. The controller of the rechargeable battery recognizes the electric pulse or the sequence of electric pulses that are received at a terminal for the power line of the rechargeable battery. The controller of the rechargeable battery in return broadcasts information on battery type (optional), identity (i. e. identity code) and actual battery status (i. e. battery status information) to the battery charger via its interface for wireless communication. The battery charger receives this information using its interface for wireless communication and the controller of the battery charger uses this information to choose and apply an optimal charging protocol when charging the rechargeable battery that is connected to the battery charger.

Embodiments of a battery management system for a rechargeable battery comprise a sensor, an interface, a memory and a controller. The sensor is adapted to measure at least a voltage and/or current of at least one cell of a rechargeable battery or of all the cells of the rechargeable battery or of the rechargeable battery as a whole and to output an according signal. Thus, the sensor may consist of several sub-sensors, if required. The sensor may be able to determine a status of the battery. There may be additional sensors capable of measuring a state of the rechargeable battery or its surroundings and of outputting according signals. The interface is adapted for wireless communication with *inter alia* an especially remote battery charger, the battery charger not being part of the battery management system. The controller is connected to the sensor, the interface for wireless communication and the memory and adapted to monitor the signal received from the sensor, to determine operating conditions of the rechargeable battery based on the monitored signal received from the sensor, and to store the determined operating conditions in the memory. Thus, the controller is further adapted to determine one electric pulse or a sequence of electric pulses during a charging state of the rechargeable battery by monitoring the signal received from the sensor. The electric pulse may be a voltage pulse or a current pulse or a combined voltage pulse and current pulse. This electric pulse or sequence of electric pulses may be measured directly by measuring current and/or voltage. As current sensors are expensive, a current pulse may even be measured indirectly by measuring voltage and using appropriate algorithms. The electric pulse or a sequence of electric pulses are caused by a charger connected to the battery and thus differ from internal current and/or voltage of the rechargeable battery during charging or discharging. According to an embodiment, the electric pulse or a sequence of electric pulses are received via a power line and thus via a wire. The controller is further adapted to broadcast a message in response to the detected electric pulse or to the detected sequence of electric pulses via the interface for wireless communication, the message including information allowing to establish direct communication with the interface of the battery management system and/or a battery identity code and/or battery status information. According to an embodiment, the information allowing to establish direct communication with the interface of the battery management system may contain a unique identifier ID of the battery management system.

Thus, the battery management system is waiting for an electric pulse or sequence of electric pulses that are provided by a battery charger to the battery management system or the rechargeable battery housing the same. Receipt of this electric pulse or sequence of electric pulses is interpreted by the battery management system as an invitation of the battery charger to establish a direct communication with the battery management system of the rechargeable battery connected to the battery charger. By broadcasting information allowing to establish direct communication with the interface of the battery management system in response to the detected electric pulse or to the detected sequence of electric pulses it is possible to establish this direct wireless communication between the battery management system and the battery charger. By broadcasting battery identity code and/or battery status information in response to the detected electric pulse or to the detected sequence of electric pulses the battery charger receives information allowing the battery charger to adapt and control a charging process for charging the rechargeable battery.

According to an embodiment, in the present application "to broadcast" or "broadcasting" means that information is transmitted to a (theoretically unlimited) number of recipients simultaneously, especially without addressing the recipients.

According to an embodiment, in the present application "direct communication" means that information is transmitted to one single specific recipient, especially using unicast addressing.

According to an embodiment, the information allowing to establish direct communication with the interface of the battery management system and/or the message including a battery identity code and/or battery status information is exclusively broadcasted in response to the detected electric pulse or to the detected sequence of electric pulses, only.

According to an embodiment, the electric pulse or sequence of electric pulses differ in at least one of length, height and frequency from the electric pulses determined during normal charging operation and/or during normal power line communication. This allows the battery management system to distinguish between electric pulses that are received from the battery charger during normal charging operation and electric pulses that are issued by the battery charger to invite the battery management system to establish a direct communication with the battery charger. The electric pulses determined during normal charging operation are known to the battery management system e. g. from a charging protocol of the battery. The electric pulses determined during normal power line communication are known to the battery management system e. g. from a communication protocol of the communication standard used for the power line communication. Normally, the electric pulses during normal charging operation do not contain information, unless power line communication PLC is performed.

According to an alternative embodiment, the electric pulse or sequence of electric pulses do not differ in length, height and frequency from the electric pulses determined during normal charging operation. In this case, the controller is further adapted to exclusively broadcast the message in response to the detected electric pulse or to the detected sequence of electric pulses via the interface for wireless communication after receipt of the first electric pulse or sequence of electric pulses, only.

According to an embodiment, the controller of the battery management system is further adapted to send data stored in the memory via the interface for wireless communication after a direct communication has been established, the data including at least one of a history of operating conditions of the rechargeable battery, a present operating condition of the rechargeable battery and a charging protocol for the rechargeable battery. In this respect it is emphasized that the memory may be an element different from the controller of the battery management system or embedded in the controller.

For instance, a charging protocol may request that a rechargeable battery is charged nine times to 80% of its total capacity and the tenth time to 100% of its total capacity. Such information may be provided from the battery management system to the battery charger after a direct communication has been established.

According to an embodiment, the message broadcasted in response to the detected electric pulse or to the detected sequence of electric pulses contains characteristics of the detected electric pulse or on the detected sequence of electric pulses. The characteristics (e. g. height, length, frequency) of the electric pulse or the sequence of electric pulses are known to the battery charger that has caused the electric pulse or the sequence of electric pulses. By embedding these characteristics into the message broadcasted in response to the detected electric pulse or to the detected sequence of electric pulses, it is apparent for the battery charger that only the rechargeable battery that is connected to the same can provide this information. Thus, the battery charger can decide to establish a direct communication only with the battery management system that has broadcasted the correct characteristics of the electric pulse or on the sequence of electric pulses.

According to an embodiment, the battery management system further comprises an interface for wired communication with a battery charger via a power line, wherein the controller is connected to the interface for wired communication and adapted to receive and/or submit data via the interface for wired communication in response to the detected electric pulse or to the detected sequence of electric pulses. Thus, a backup system to the interface for wireless communication may be provided.

According to an embodiment the controller of the battery management system is adapted to receive configuration data via the interface for wireless communication or wired communication after direct communication has been established.

According to an embodiment, the battery management system further comprises at least one of a temperature sensor adapted to measure a temperature of at least one cell or of all the cells of the rechargeable battery or of the rechargeable battery as a whole, the temperature sensor being connected to the controller, a current sensor adapted to measure a current of at least one cell or of all the cells of the rechargeable battery or of the rechargeable battery as a whole, the current sensor being connected to the controller, and an impedance sensor adapted to measure impedance of at least one cell or of all the cells of the rechargeable battery or of the rechargeable battery as a whole, the impedance sensor being connected to the controller. According to this embodiment, the controller is adapted to monitor the signals of all sensors and to determine the operating conditions of the rechargeable battery (i. e. battery status information) based on all monitored signals, and to store the determined operating conditions in the memory. It is emphasized that the present invention is not restricted to the types of sensors listed above. Any sensor capable of measuring a state of the rechargeable battery or its surroundings may be used.

Embodiments of a rechargeable battery comprise one cell or plural cells and the battery management system described above. The battery management system may be contained in a common housing of the rechargeable battery together with the at least one cell.

Embodiments of a battery charger for a rechargeable battery comprise a power source, an interface and a controller. The power source is adapted to supply a voltage and a current to a rechargeable battery, wherein the voltage and/or current are controlled by the power source. The interface is adapted for wireless communication with a battery management system of a rechargeable battery. The controller is connected to both the power source and the interface for wireless communication and adapted to control the power source. The controller is further adapted to control the power source such that one electric pulse or a sequence of electric pulses is issued to a rechargeable battery connected to the power source at the beginning of a charging state, to monitor the interface for wireless communication for a broadcast message responding to the electric pulse or to the sequence of electric pulses, the message including information allowing to establish direct communication with an interface of a battery management system and/or including a battery identity code and/or battery status information, and to establish a direct communication with the rechargeable battery based on the information contained in the message (if the message includes information allowing to establish direct communication with an interface of a battery management system) and/or to adapt and control a charging process for charging the rechargeable battery based on the battery identity code and/or battery status information, if the message includes the battery identity code and/or battery status information. According to an embodiment, the electric pulse or a sequence of electric pulses are issued via a power line and thus via a wire.

As the electric pulse or the sequence of electric pulses that are issued by the power source can be exclusively received by the rechargeable battery connected to the same, only, the battery charger knows that a message broadcasted in response to the electric pulse or to the sequence of electric pulses can only be issued by this connected rechargeable battery. Thus, a direct communication between the battery charger and the rechargeable battery connected to the same can be established.

According to an embodiment the electric pulse or sequence of electric pulses issued to the rechargeable battery connected to the power source at the beginning of a charging state differ in at least one of length, height and frequency from electric pulses issued during normal charging operation and/or during normal power line communication. This enables a battery management system to distinguish between the electric pulse or sequence of electric pulses that are provided in order to initiate a direct communication and electric pulses that are provided during normal charging operation and/or during normal power line communication. The electric pulses that are provided during normal charging operation are known to the battery charger e. g. from the charging protocol of the rechargeable battery. The electric pulses determined during normal power line communication are known to the battery charger e. g. from a communication protocol of the communication standard used for the power line communication.

According to an embodiment, the controller of the battery charger is further adapted to select or adapt a charging protocol that is used for controlling the power source for charging the rechargeable battery in response to information received from the battery management system during direct communication.

According to an embodiment, the controller of the battery charger is adapted to control the power source such that the amount and/or timing of the one electric pulse is randomly selected and/or that the amount and/or interval between electric pulses of the sequence of electric pulses is randomly selected. If these characteristics are correctly embedded in a message broadcasted by a battery management system in response to receipt of the electric pulse or sequence of electric pulses, it is clear that the message was broadcast from a rechargeable battery connected to the battery charger that has issued the electric pulse or sequence of electric pulses. Alternatively, the amount and/or timing of the one electric pulse may be predefined in the battery charger and/or that the amount and/or interval between electric pulses of the sequence of electric pulses may be predefined in the battery charger. According to an embodiment, the amount and/or timing of the one electric pulse and/or that the amount and/or interval between electric pulses of the sequence of electric pulses that is predefined in the battery charger is unique and thus different between battery chargers.

According to an embodiment, the controller of the battery charger is adapted to check whether the message broadcasted in response to the electric pulse or to the sequence of electric pulses issued to the rechargeable battery connected to the power source at the beginning of a charging state is received within a maximum threshold time after issuing the electric pulse or the sequence of electric pulses. This threshold time is preferably set short (e. g. 1 second or 0.5 second or 0.1 second). A message that was broadcasted by a battery management system shortly after the electric pulse or the sequence of electric pulses have been issued by the power source most likely was generated by the battery management system belonging to the rechargeable battery that is connected the battery charger containing the power source. Thus, there is a temporal dependency between the message broadcasted by the battery management system and the electric pulses generated by the power source of the battery charger.

According to an embodiment, the controller of the battery charger is adapted to check whether the message broadcasted in response to the electric pulse or to the sequence of electric pulses contains correct characteristics on the electric pulse or on the sequence of electric pulses. As the characteristics on the electric pulse or on the sequence of electric pulses are exclusively known by the battery charger and the rechargeable battery connected to the same, it is possible to verify whether a message broadcasted in response to the electric pulse or to the sequence of electric pulses was issued by the rechargeable battery connected to the battery charger.

According to an embodiment, the battery charger further comprises an interface for wired communication with the battery management system of the rechargeable battery via a power line, wherein the controller of the battery charger is connected to the interface for wired communication and adapted to receive and/or submit data via the interface for wired communication in response to the message broadcasted in response to the electric pulse (i. e. after direct communication has been established).

According to an embodiment, the controller of the battery charger is adapted to control the power source in accordance with a default charging protocol as long as no electric pulse or sequence of electric pulses has been sent and/or no message broadcasted in response to the electric pulse or sequence of electric pulses has been received (i. e. as long as no direct communication has been established), wherein the default charging protocol teaches to charge the rechargeable battery using at most 30 % or at most 20 % or at most 10 % of a maximum charging current. Thus, charging of the rechargeable battery may start without unnecessary delay, while the risk of damaging the rechargeable battery due to an excessive charging current is kept low.

According to an embodiment, the battery charger further comprises a voltage sensor adapted to measure voltage of the rechargeable battery and to output an according signal, wherein the controller of the battery charger is further adapted to monitor the signal received from the voltage sensor and to control the power source such that a charging current and/or electric pulse and/or sequence of electric pulses is issued if the signal received from the voltage sensor exceeds a predefined threshold. Thus, the battery charger can detect automatically that a rechargeable battery has been connected.

A system comprises at least one rechargeable battery as described above and at least one battery charger as described above. The system allows to automatically detect which rechargeable battery is connected to which charger and to establish a direct communication between the same.

According to an embodiment, the system further comprises a database remote from both the at least one rechargeable battery and the at least one battery charger, the database comprising an interface for wireless or wired communication, the interface being adapted to communicate with the at least one rechargeable battery and/or the at least one battery charger in order to retrieve information stored in the memories of the battery management systems of the rechargeable batteries. Thus, it is possible to monitor a high number of rechargeable batteries using a centralized database.

According to an embodiment a battery management system for rechargeable batteries is composed of at least one sensor in at least one battery cell to measure a battery parameter like voltage or current or temperature or acid level. The battery management system is capable to establish a wireless connection with a battery charger. The battery management system is further enabled to identify individual batteries via electric pulse signals and, recognizing the actual battery status based on sensor-detected battery parameter(s), to transmit to the battery charger information allowing to optimize a charging profile for the rechargeable battery connected to the battery charger.

It is noted in this connection that the terms "comprise," "have," "include," "contain" and "with" used in this description and in the claims to list features, as well as their grammatical variants should generally be considered to be an incomplete listing of features, e. g., method steps, devices, areas, variables and the like, and they do not in any way exclude the presence of other or additional features or groupings of other or additional features.

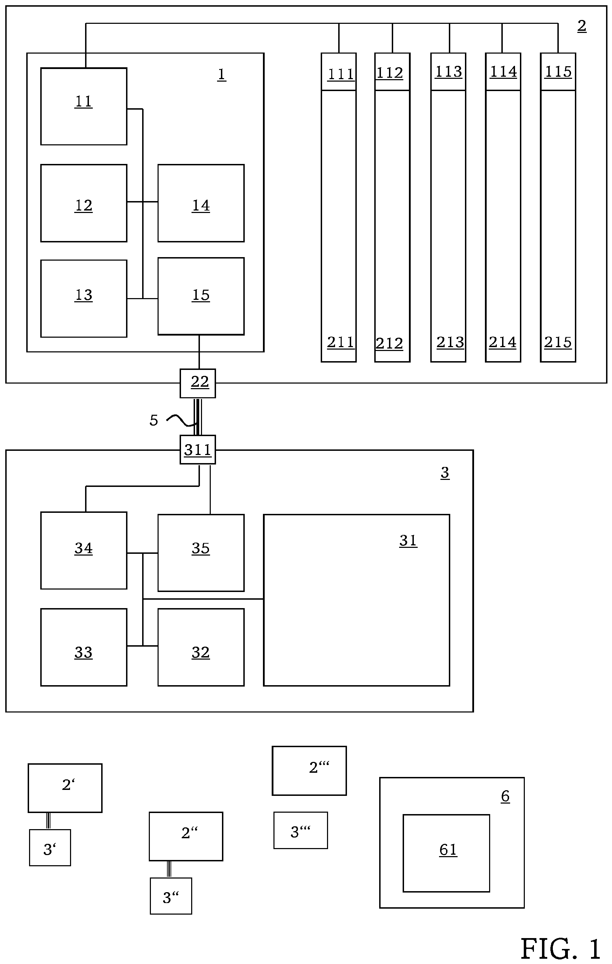

Further features of the present invention appear from the following description of exemplary embodiments in conjunction with the claims as well as with the figures. It should be noted that the present invention is not limited to the embodiments of the exemplary embodiments described, but is determined by the scope of the attached patent claims. In particular, the individual features may be embodied in embodiments according to the present invention in a different number and combination than in the examples mentioned below. Reference will be made in the following explanation of an exemplary embodiment of the present invention to the attached figures, in which
- Figure 1: shows a system comprising a rechargeable battery, a battery charger and a database according to an embodiment of the invention.

In the exemplary embodiments described below, components that are alike in function and structure are designated as far as possible by alike reference numerals. Therefore, to understand the features of the individual components of a specific embodiment, the descriptions of other embodiments and of the summary of the disclosure should be referred to.

An embodiment of a system comprises a rechargeable battery 2, a battery charger 3 and a database 6 and the operation thereof will be described in the following referring to Figure 1. The rechargeable battery 2, battery charger 3 and database 6 each are distinct elements separate from each other.

The battery charger 3 comprises a power source 31, an interface for wireless communication 32, a microprocessor 33 acting as controller, an interface for wired communication 34 and a voltage sensor 35 which are interconnected by a common bus system. A terminal for a power line 311 is provided at an outside of the battery charger 3. The terminal for a power line 311 is connected to the voltage sensor 35, the power source 31 and the interface for wired communication 34. The interface for wired communication 34 enables power line communication PLC with the battery management system of the rechargeable battery 2. In this respect, it is mentioned that the Figure is very schematic and generally does not show power lines except for a power line 5 connecting the terminal for a power line 311 of the battery charger 3 with a corresponding terminal 22 of the rechargeable battery 2.

The voltage sensor 35 measures voltage applied to the terminal for a power line 311 and outputs an according signal to the microprocessor 33. The microprocessor 33 compares the signal received from the voltage sensor 35 with a preset threshold stored in an internal memory of the microprocessor 33. As soon as the signal received from the voltage sensor 35 exceeds the preset threshold (starting from a value of zero or close to zero), it is decided by the microprocessor 33 that a rechargeable battery 2 has been connected to the terminal for a power line 311 of the battery charger 3. As the rechargeable battery 2 has not yet been identified at this stage of time, the microprocessor 33 controls the power source 31 to supply the rechargeable battery 2 with a controlled charging current and charging voltage in accordance with a default charging protocol stored in the internal memory of the microprocessor 33 until the rechargeable battery 2 has been identified. In the present embodiment, the default charging protocol teaches to charge the rechargeable battery 2 using 15 % of a maximum charging current of the power source 31, for example.

By controlling the power source 31 accordingly, the microprocessor 33 causes the power source 31 to apply a sequence of electric pulses to the rechargeable battery 2. In the present embodiment, the sequence of electric pulses consists of a sequence of current pulses. However, it is emphasized that the present invention is not restricted to current pulses. A general electric pulse (current or voltage or combined current and voltage) is sufficient.

In the present embodiment, the amount and interval between electric pulses of the sequence of electric pulses is randomly selected by the microprocessor 33 such that the sequence of electric pulses issued to the rechargeable battery 2 differs from electric pulses issued during normal charging operation. However, the present invention is not restricted to such a selection of the sequence of electric pulses.

The rechargeable battery 2 (in the present case a lithium-ion battery; however, the present invention is not restricted to a certain type of battery) comprises five cells 211 to 215 and a battery management system 1. Each cell 211 to 215 is provided with a voltage sensing element 111 to 115 measuring the voltage of the corresponding cell 211 to 215. However, it is not necessary to provide a voltage sensing element for each cell if the rechargeable battery is for instance a lead-acid battery. Furthermore, the rechargeable battery 2 is provided with a terminal for a power line 22 in order to connect the rechargeable battery 2 to the battery charger 3 via a power line 5.

All voltage sensing elements 111 to 115 are connected to a sensor unit 11 of the battery management system 1. The sensor unit 11 is thus capable to measure voltages of each cell 211 to 215 individually and even of all cells 211 to 215 together and to output according signals to a microprocessor 14 of the battery management system 1.

The microprocessor 14 of the battery management system 1 acts as controller of the battery management system 1. The microprocessor 14 is capable to determine a voltage and/or current applied to the rechargeable battery 2 as a whole by using the signals received from the sensor unit 11. The microprocessor 14 is further connected to an interface 12 for wireless communication, a memory 13 and an interface for wired communication 15 via a bus system. The microprocessor 14 provides the usual functionality of a battery management system 1 and thus monitors the signal received from the sensor unit 11, determines operating conditions of the rechargeable battery 2 based on the monitored signal (and thus to determine a battery status) and stores the determined operating conditions in the memory 13.

Furthermore, the microprocessor 14 determines that the sequence of electric pulses is applied to the rechargeable battery 2 by the power source 31 of the battery charger 3 via the power line 5 and the terminal 22. The microprocessor 14 checks whether the sequence of electric pulses differ in length, height and frequency from the electric pulses determined during normal charging operation by referring to a charging protocol for the rechargeable battery 2 stored in the memory 13. If it is determined that the sequence of electric pulses differs from the electric pulses determined during normal charging operation, the microprocessor 14 broadcasts a message in response to the detected sequence of electric pulses via the interface 12 for wireless communication. In the present embodiment, the message includes an identifier (ID) of the rechargeable battery 2 and characteristics of the detected sequence of electric pulses (length, height and frequency) a battery status information and allows to establish a direct communication with the interface 12 for wireless communication of the battery management system 1.

The microprocessor 33 of the battery charger 3 receives the broadcast message from the battery management system 1 of the rechargeable battery 2 via the interface for wireless communication 32 and checks whether the message was received within a preset threshold time and whether characteristics of the sequence of electric pulses contained in the broadcast message match with the characteristics of the sequence of electric pulses applied to the rechargeable battery 2 using the power source 31. If the message was received in time and the characteristics match each other, it is decided by the microprocessor 33 that the broadcast message was sent from a rechargeable battery 2 that is connected to the battery charger 3. In consequence, the microprocessor 33 establishes a direct communication with the rechargeable battery 2 using the information contained in the broadcast message.

The direct communication between the rechargeable battery 2 and the battery charger 3 may include a history of operating conditions of the rechargeable battery 2 and a present operating condition of the rechargeable battery 2 and even the exchange of a charging protocol or of configuration data or an adaptation of the same. For instance, the battery management system 1 may instruct the battery charger 3 to apply a certain charging algorithm. Alternatively, the microprocessor 33 of the battery charger 3 may select a suitable charging protocol for the rechargeable battery 2 out of a number of charging protocols prestored in the internal memory of the microprocessor 33 based on the identifier contained in the broadcast message.

Wired communication between the rechargeable battery 2 and the battery charger 3 may be performed by using power line communication PLC via power line 5.

Database 6 of the system comprises an interface 61 for wireless communication with both the rechargeable battery 2 and the battery charger 3 and stores data received from the same. Thus, a user can get an immediate overview over the status of all rechargeable batteries 2 and battery chargers 3 of the system. It is obvious that the database 6 may alternatively or additionally use an interface for wired communication with the rechargeable battery 2 and/or the battery charger 3.

Figure 1 further shows another rechargeable battery 2' which is a lead-acid battery and is connected to another battery charger 3' and another rechargeable battery 2" which is a NiMh battery connected to another battery charger 3". Finally, yet another battery 2''' and another battery charger 3''' are shown which are not connected to one another. The functionality of the other rechargeable batteries 2', 2", 2''' and battery chargers 3', 3", 3''' are similar to the functionality of the rechargeable battery 2 and battery charger 3 described above. Obviously, pairing of the rechargeable battery 3''' with the battery charger 2''' is not possible as the rechargeable battery 3''' does not receive electric pulses that may trigger broadcasting of a message. All rechargeable batteries 2, 2', 2", 2''' and battery chargers 3, 3', 3", 3''' of the system are capable to communicate with the database 6 as well

Thus, it is obvious that the system may contain any number of rechargeable batteries and battery chargers; the numbers of rechargeable batteries and battery chargers may even differ from one another (however, if the number differs, there will be some batteries or battery chargers that are actually not used). Furthermore, although the sequence of electric pulses has been arbitrarily selected in the above embodiment, it is obvious that a preset sequence of electric pulses may alternatively be used.

While the disclosure has been described with respect to certain exemplary embodiments thereof, it is evident that many alternatives, modifications and variations will be apparent to those skilled in the art. Accordingly, the exemplary embodiments of the disclosure set forth herein are intended to be illustrative and not limiting in any way. Various changes may be made without departing from the spirit and scope of the present disclosure as defined in the following claims.

### List of reference signs

- 1: battery management system
- 11: sensor for measuring voltage and/or current/sensor for determining a status of the rechargeable battery
- 111 to 115: voltage sensing elements
- 12: interface for wireless communication
- 13: memory
- 14: microprocessor / controller
- 15: interface for wired communication

- 2, 2', 2", 2"': rechargeable battery
- 211 to 215: cells
- 22: terminal for a power line of the rechargeable battery

- 3, 3', 3", 3''': battery charger
- 31: power source
- 311: terminal for a power line
- 32: interface for wireless communication
- 33: microprocessor /controller
- 34: interface for wired communication
- 35: voltage sensor

- 5: power line

- 6: database
- 61: interface

## Claims

1. A battery/charger management system, comprising:
at least one rechargeable battery (2, 2', 2", 2"') with an integrated battery management system (1), and
at least one battery charger (3) with a voltage sensor (35), an interface for wireless communication (32) and a controller (33) connected to both the voltage sensor (35) and the interface for wireless communication (32),
whereby
the battery management system (1) comprises a sensor (11) for determining a status of the rechargeable battery, an interface for wireless communication (12) and a memory (13), the sensor, interface (12) and memory (13) being connected to the controller (14), and the sensor (11) being connected with at least one sensing element (111 to 115) to monitor at least one battery status parameter to be electronically stored in the memory (13) for processing by the controller (14) and for transferring battery status information derived from said battery status parameter via the interface (12) to the at least one battery charger (3) whereby the controller (33) of the battery charger (3), as soon as it is determined by the voltage sensor (35) that a rechargeable battery (2) has been connected to the battery charger (3), is adapted to apply an electric pulse signal via a power line (5) to the battery management system (1) of the rechargeable battery (2) which in turn broadcasts a battery identity code and battery status information via the interface for wireless communication (12) of the rechargeable battery (2) and the interface for wireless communication (32) of the battery charger (3) to the controller (33) of the charger which in turn adapts and controls the charging process to charge the rechargeable battery.

2. A battery management system (1) for a rechargeable battery (2), the battery management system (1) comprising:
a sensor (11) adapted to measure at least a voltage and/or current
of at least one cell (211 to 215) of a rechargeable battery (2)
or of all the cells (211 to 215) of the rechargeable battery (2) or
of the rechargeable battery (2) as a whole
and to output an according signal;
an interface (12) adapted for wireless communication with a battery charger (3);
a memory (13); and
a controller (14) connected to the sensor (11), the interface (12) and the memory (13),
wherein the controller (14) is adapted
to monitor the signal received from the sensor (11),
to determine operating conditions of the rechargeable battery (2) based on the monitored signal, and
to store the determined operating conditions in the memory (13),
wherein the controller (14) is further adapted
to determine
one electric pulse received via a power line or
a sequence of electric pulses received via a power line during a charging state of the rechargeable battery (2) by monitoring the signal received from the sensor (11), and
to broadcast a message in response to the detected electric pulse or to the detected sequence of electric pulses via the interface (12), the message including information allowing to establish direct communication with the interface (12) of the battery management system (1) or the message including a battery identity code and/or battery status information.

3. The battery management system (1) of claim 2, wherein the electric pulse or sequence of electric pulses differ in length and/or height and/or frequency from the electric pulses determined during normal charging operation.

4. The battery management system (1) of claim 2 or 3, wherein the controller (14) is further adapted to send data stored in the memory (13) via the interface (12) after a direct communication has been established, the data including at least one of a history of operating conditions of the rechargeable battery (2), a present operating condition of the rechargeable battery (2) and a charging protocol for the rechargeable battery (2).

5. The battery management system (1) of one of claims 2 to 4, wherein the message broadcasted in response to the detected electric pulse or to the detected sequence of electric pulses via the interface (12) contains characteristics of the detected electric pulse or of the detected sequence of electric pulses.

6. The battery management system (1) of one of claims 2 to 5, further comprising an interface for wired communication (15) with a battery charger (3) via a power line, wherein the controller (14) is connected to the interface for wired communication and adapted to receive and/or submit data via the interface for wired communication in response to the detected electric pulse or to the detected sequence of electric pulses.

7. A rechargeable battery (2), comprising one cell (211 to 215) or plural cells (211 to 215) and the battery management system (1) of one of claims 2 to 6.

8. A battery charger (3) for a rechargeable battery (2), the battery charger (3) comprising:
a power source (31), adapted to supply a voltage and a current to a rechargeable battery (2);
an interface (32) adapted for wireless communication with a battery management system (1) of a rechargeable battery (2); and
a controller (33) connected to the power source (31) and the interface (32),
wherein the controller (33) is adapted to control the power source (31),
wherein the controller (33) is further adapted
to control the power source (31) such that one electric pulse or a sequence of electric pulses is issued via a power line to a rechargeable battery (2) connected to the power source (31) at the beginning of a charging state,
to monitor the interface (32) for a message broadcasted in response to the electric pulse or to the sequence of electric pulses, the message including information allowing to establish direct communication with an interface (12, 15) of a battery management system (1) or the message including a battery identity code and/or battery status information, and
to establish a direct communication with the rechargeable battery (2) based on the information contained in the message and/or to adapt and control a charging process for charging the rechargeable battery based on the battery identity code and/or battery status information.

9. The battery charger (3) of claim 8, wherein the electric pulse or sequence of electric pulses issued to the rechargeable battery (2) connected to the power source (31) at the beginning of a charging state differ in at least one of length, height and frequency from electric pulses issued during normal charging operation.

10. The battery charger (3) of one of claims 8 or 9, wherein the controller (33) is adapted to control the power source (31) such
that the amount and/or timing of the one electric pulse is randomly selected and/or
that the amount and/or interval between electric pulses of the sequence of electric pulses is randomly selected.

11. The battery charger (3) of one of claims 8 to 10, wherein the controller (33) is adapted to check
whether the message broadcasted in response to the electric pulse or to the sequence of electric pulses issued to the rechargeable battery (2) connected to the power source (31) at the beginning of a charging state is received within a maximum threshold time after issuing the electric pulse or the sequence of electric pulses and/or
whether the message broadcasted in response to the electric pulse or to the sequence of electric pulses contains correct characteristics of the electric pulse or of the sequence of electric pulses.

12. The battery charger (3) of one of claims 8 to 11,
further comprising an interface for wired communication (34) with the battery management system (1) of the rechargeable battery (2) via a power line, wherein the controller (33) is connected to the interface for wired communication (34) and adapted to receive and/or submit data via the interface for wired communication (34) in response to the message broadcasted in response to the electric pulse or sequence of electric pulses.

13. The battery charger (3) of one of claims 8 to 12, wherein the controller (33) is adapted to control the power source (31) in accordance with a default charging protocol as long as no electric pulse or sequence of electric pulses has been sent and/or no message broadcasted in response to the electric pulse or sequence of electric pulses has been received, wherein the default charging protocol teaches to charge the rechargeable battery (2) using at most 30 % or at most 20 % or at most 10 % of a maximum charging current.

14. The battery charger (3) of one of claims 8 to 13,
further comprising a voltage sensor (35) adapted to measure voltage of the rechargeable battery (2) and to output an according signal,
wherein the controller (33) is further adapted
to monitor the signal received from the voltage sensor (35), and
to control the power source (31) such that a charging current and/or electric pulse and/or sequence of electric pulses is issued if the signal received from the voltage sensor (35) exceeds a predefined threshold.

15. System, comprising:
at least one rechargeable battery (2) according to claim 7; and
at least one battery charger (3) according to one of claims 8 to 14.
